# EUROPÄISCHE PATENTSCHRIFT

(11) **EP 1 345 022 B1**
(45) Veröffentlichungstag und Bekanntmachung des Hinweises auf die Patenterteilung: **08.08.2018**
(21) Anmeldenummer: 02025971.9
(22) Anmeldetag: 21.11.2002
(51) Int. Cl.: G01D 5/244, G01D 18/00

(54) **Verfahren zur Kalibrierung eines Sensors und Schaltungsanordnung zum Betreiben eines Sensors**
Method for calibrating a sensor and circuit arrangement for using a sensor
Méthode de calibration d'un palpeur et arrangement de circuit pour utilisation d'un palpeur

(30) Priorität: 21.02.2002 DE 10207228
(43) Veröffentlichungstag der Anmeldung: 17.09.2003
(73) Patentinhaber: ROBERT BOSCH GMBH, 70442 Stuttgart (DE)
(72) Erfinder: Walter, Klaus, 74321 Bietigheim-Bissingen (DE); Rettig, Rasmus, 70839 Gerlingen (DE)

(56) Entgegenhaltungen:
- WO-A-00/62015
- DE-A1- 19 853 310
- US-A- 4 285 240
- US-A- 4 831 549
- US-A- 4 838 483
- US-A- 5 209 131
- US-A- 5 372 365
- US-A- 6 128 585
- US-A1- 2001 019 321
- US-A1- 2001 038 453

## Beschreibung

### Stand der Technik

Die Erfindung betrifft ein Verfahren zur Kalibrierung eines Sensors nach dem Oberbegriff des Anspruchs 1 sowie eine Kombination aus einer Abgleicheinheit und einem Sensor nach dem Oberbegriff des Anspruchs 8.

Insbesondere im Bereich magnetischer Sensoren zur Drehzahl-und Positionserfassung von Elementen eines Kraftfahrzeuges, zum Beispiel für ein Antiblockiersystem (ABS) oder die Motorregelung werden heutzutage sehr hohe Anforderungen an die Zuverlässigkeit, Genauigkeit und Schnelligkeit der Sensoren, beispielsweise Hall-, AMR- oder GMR-Sensoren, gestellt. Häufig gehen aber Maßnahmen zur Verbesserung des einen Parameters zu Lasten eines anderen Parameters. So ist es beispielsweise im Hinblick auf eine Unempfindlichkeit gegenüber Vibrationen vorteilhaft, einen Sensor mit einer geringen Empfindlichkeit zu verwenden. Im Hinblick auf ein in der Regel vorhandenes schwaches Signal, welches vom Sensor erfaßt werden soll, wäre es jedoch wünschenswert, einen Sensor mit einer möglichst großen Empfindlichkeit zu verwenden.

Beispielsweise bei magnetischen Sensoren zur Erfassung einer Drehzahl oder Position einer Welle beziehungsweise eines Rades, welche so angeordnet sind, daß die Stirnseite eines Zahnes eines Geber-Zahnrades an dem Sensor vorbeistreicht, kann bei einem sehr kleinen Luftspalt ein Sensor mit einer geringen Empfindlichkeit verwendet werden, welche unempfindlich gegenüber Vibrationen ist. Ein kleiner Luftspalt erfordert jedoch eine hohe Präzision beim Einbau, was sich nachteilig auf die Herstellungskosten auswirkt. Im Hinblick auf einen möglichst einfachen Einbau ist ein größerer Luftspalt von Vorteil, was jedoch einen empfindlicheren Sensor erfordert. Eine Verbesserung bringen Kalibrierverfahren. Ein Kalibrierverfahren für ein abhängig von einem Sensor arbeitendes System in einem Kraftfahrzeug ist aus der DE 100 17 278.4 bekannt.

Aus der WO 94/12940 A1 ist ein Verfahren zur Kalibrierung eines Sensors bekannt, wobei der Sensor in einer vorbestimmten Lage angeordnet wird, an den Sensor eine Abgleicheinheit angeschlossen wird, die zur Kalibrierung erforderlichen Daten ermittelt werden und die ermittelten Kalibrationsdaten in einen Speicher des Sensors dauerhaft gespeichert werden.

Es ist Aufgabe der Erfindung, ein eingangs genanntes Verfahren zur Kalibrierung eines Sensors beziehungsweise eine Schaltungsanordnung zum Betreiben eines Sensors derart auszubilden, daß der Sensor bezogen auf seine Einbauposition verbesserte Eigenschaften hat.

Die Lösung dieser Aufgabe ergibt sich aus den Merkmalen der unabhängigen Ansprüche 1 und 8. Vorteilhafte Weiterbildungen der Erfindung ergeben sich aus den Unteransprüchen.

Gemäß der Erfindung ist ein Verfahren zur Kalibrierung eines Sensors dadurch gekennzeichnet, daß die Kalibrierung nach dem bestimmungsgemäßen Einbau des Sensors erfolgt, wobei die vom Sensor zu detektierende Funktion wenigstens einmal durchgeführt wird, das vom Sensor entsprechend ausgegebene Signal in der Abgleicheinheit auf Plausibilität geprüft wird und bei Plausibilität die Kalibrationsdaten in den Speicher geschrieben werden, wobei mehrere demselben Zweck dienende Sensoren vorhanden sind und die Plausibilitätsprüfung durch Vergleich des Ausgangssignals des zu kalibrierenden Sensors mit dem Ausgangssignal eines anderen Sensors erfolgt.

Des weiteren ist gemäß der Erfindung eine Kombination aus einer Abgleicheinheit und einem Sensor mit einer Schaltungsanordnung und einem Speicher dadurch gekennzeichnet, dass die Abgleicheinheit ausgebildet ist, um die Kalibrierung nach dem bestimmungsgemäßen Einbau des Sensors durchzuführen, wobei die vom Sensor zu detektierende Funktion wenigstens einmal durchgeführt wird, das vom Sensor entsprechend ausgegebene Signal in dem Steuergerät auf Plausibilität geprüft wird und bei Plausibilität die Kalibrationsdaten in den Speicher geschrieben werden, wobei mehrere demselben Zweck dienenden Sensoren vorgesehen sind und die Plausibilitätsprüfung durch Vergleich des Ausgangssignals des zu kalibrierenden Sensors mit dem Ausgangssignal eines anderen Sensors erfolgt.

### Vorteile der Erfindung

Dadurch, daß die zur Kalibrierung erforderlichen Daten bei einem Sensor ermittelt werden, wenn der Sensor in einer vorbestimmten Lage angeordnet ist und an den Sensor eine Abgleicheinheit oder ein Steuergerät angeschlossen worden ist, und die ermittelten Kalibrationsdaten dauerhaft in einem nichtflüchtigen Speicher gespeichert werden, kann in vorteilhafter Weise erreicht werden, daß die Kalibrationsdaten bei jeder Inbetriebnahme des Sensors ohne Zeitverzögerung zur Verfügung stehen. Es ist nicht mehr erforderlich, daß der Sensor bei jeder Inbetriebnahme kalibriert wird.

Durch die erfindungsgemäße Erfassung der Kalibrationsdaten ergibt sich darüber hinaus der Vorteil, daß dafür Sorge getragen werden kann, daß die Kalibrationsdaten störungsfrei ermittelt werden können. Das heißt, während es beim herkömmlichen Kalibrieren eines Sensors nicht gewährleistet ist, daß während er Erfassung der Kalibrationsdaten keine äußeren Störungen wie beispielsweise Vibrationen auftreten, da die Erfassung der Kalibrationsdaten bei jeder Inbetriebnahme des Sensors, also zu beliebigen Zeitpunkten und bei beliebigen Umgebungsbedingungen erfolgt, kann die Kalibrierung gemäß dem erfindungsgemäßen Verfahren bei definierten Bedingungen erfolgen.

Besonders vorteilhaft ist es, wenn die Abgleicheinheit oder das Steuergerät ein vorbestimmtes Signal abgibt, welches an den Sensor angelegt wird. Hierdurch kann die Kalibrierung und Speicherung der Kalibrationsdaten in den nicht flüchtigen Speicher bei jeder Inbetriebnahme, insbesondere aber bei der ersten Inbetriebnahme des Sensors auf einfache Weise erfolgen. Sehr vorteilhaft ist es, wenn die Kalibrationsdaten bei der ersten Inbetriebnahme des Sensors in den nicht flüchtigen Speicher gespeichert und gegen Überschreiben gesichert werden. Hierdurch stehen nach der ersten Inbetriebnahme des Sensors bei jeder weiteren Inbetriebnahme des Sensors die für den Sensor erforderlichen Kalibrationsdaten ohne Zeitverzögerung zur Verfügung.

Wie bei einer besonderen Ausführungsform der Erfindung vorgesehen ist, kann bei dem erfindungsgemäßen Verfahren die Kalibrierung direkt nach der Herstellung des Sensors, also beispielsweise am Bandende der Sensorfertigung erfolgen. Hierdurch wird in vorteilhafter Weise erreicht, daß ein Sensor zur Verfügung gestellt wird, welcher sämtliche Herstellungstoleranzen bereits minimiert.

Besonders vorteilhaft ist es, wenn die vorbestimmte Lage der späteren Einbausituation für jeden einzelnen Sensor entspricht. Hierdurch kann ein Sensor zur Verfügung gestellt werden, welcher im Hinblick auf seine spätere Verwendung bereits sehr gut optimiert ist. Das heißt, der Sensor ist so empfindlich wie nötig (Erreichung des Luftspaltes) und gleichzeitig so unempfindlich gegen Vibration wie möglich. Über die optimale Anpassung der Sensorempfindlichkeit an die wirkliche Einbauposition im Fahrzeug hinaus, erlaubt ein Start des Sensors mit geeigneter, vorprogrammierter Kalibrierung einen Sensorenanlauf ohne Phasensprünge oder fehlende Ausgangssignale. Erfindungsgemäß erfolgt die Kalibrierung nach dem bestimmungsgemäßen Einbau des Sensors. Dadurch, daß die Kalibrierung erst nach dem bestimmungsgemäßen Einbau des Sensors erfolgt, lassen sich nahezu alle Toleranzen ausgleichen. So lassen sich elektrische und mechanische Toleranzen des Sensors selbst, als auch Einbautoleranzen des Sensors bei der Kalibrierung berücksichtigen. Es braucht daher insbesondere beim Einbau des Sensors keine allzu große Sorgfalt aufgewandt werden, was sich sehr vorteilhaft auf die Herstellungskosten auswirkt. Bei einer weiteren besonderen Ausführungsform der Erfindung ist vorgesehen, daß sich die bestimmungsgemäße Einbaulage in einem Kraftfahrzeug befindet, in dem der Sensor mit einem Steuergerät verbunden ist. Gerade bei der Anordnung des Sensors in einem Kraftfahrzeug bietet das erfindungsgemäße Verfahren einen großen Vorteil, da hier die eingangs genannte Problematik verstärkt vorhanden ist.

Als vorteilhaft hat sich auch eine Ausführungsform der Erfindung erwiesen, bei der die Kalibrierung sowie die Erfassung und Speicherung der Kalibrationsdaten in den nicht flüchtigen Speicher durch ein Startsignal eingeleitet wird. Hierdurch kann auf einfache Weise sichergestellt werden, daß die Kalibrierung des Sensors und Speicherung der Kalibrationsdaten in den nicht flüchtigen Speicher nur dann erfolgen wenn die Umgebungsbedingungen hierfür optimal sind. Das Startsignal, kann manuell erzeugt werden, es kann aber auch beispielsweise durch das Steuergerät eines Kraftfahrzeugs oder einer externen Steuerung erzeugt werden. Erfindungsgemäß wird eine externe Abgleicheinheit an den Sensor angeschlossen, die vom Sensor zu detektierende Funktion wenigstens einmal durchgeführt, das vom Sensor entsprechend abgegebene Signal in der Abgleicheinheit auf Plausibilität geprüft wobei bei Plausibilität die Kalibrationsdaten in den Speicher geschrieben werden. Die externe Abgleicheinheit kann beispielsweise in einer Servicestation oder Kfz-Werkstatt bereitgestellt werden. Dort kann dann gegebenenfalls manuell die vom Sensor zu detektierende Funktion wenigstens einmal durchgeführt werden. Das heißt, bei einem Sensor zur Erfassung der Umdrehung eines Rades eines Kraftfahrzeuges, wie er beispielsweise bei einem Antiblockiersystem (ABS) verwendet wird, kann das betreffende Rad manuell eine oder mehrere Umdrehungen gedreht werden. In der Abgleicheinheit sind Vergleichswerte gespeichert, mit denen das vom Sensor abgegebene Signal verglichen wird. Erkennt die Abgleicheinheit, daß die vom Sensor ausgegebenen Signale den erwarteten Werten entsprechen, das heißt, daß die Kalibrierung des Sensors erfolgreich durchgeführt wurde, so werden die Kalibrationsdaten in den Speicher geschrieben. Dies kann beispielsweise durch eine kurzzeitige Erhöhung der Versorgungsspannung geschehen, wie dies bei einer weiteren besonderen Ausführungsform der Erfindung vorgesehen ist. Erfindungsgemäß wird die vom Sensor zu detektierende Funktion wenigstens einmal durchgeführt, das vom Sensor entsprechend ausgegebene Signal in dem Steuergerät auf Plausibilität geprüft wobei bei Plausibilität die Kalibrationsdaten in den Speicher geschrieben werden. Bei einer derartigen Ausführungsform ist es nicht erforderlich, zur Kalibrierung des Sensors eine Servicestelle oder eine Kfz-Werkstatt aufzusuchen. Die Aufgabe der zuvor beschriebenen Abgleicheinheit werden bei der hier beschriebenen Ausführungsform vom Steuergerät des Kraftfahrzeugs übernommen. Es muß hierbei jedoch darauf geachtet werden, daß die Erfassung der Kalibrationsdaten zu einem Zeitpunkt erfolgt, bei dem keine Störungen vorhanden sind. Erfindungsgemäß sind mehrere demselben Zweck dienende Sensore vorhanden wobei sich die Plausibilitätsprüfung dadurch ausführen lässt, daß das Ausgangssignal des zu kalibrierenden Sensors mit dem Ausgangssignal eines anderen Sensors verglichen wird. Liefern die Ausgangssignale dasselbe Ergebnis, heißt dies, daß die vom zu kalibrierenden Sensor abgegebenen Signale korrekt sind und der Sensor kalibriert werden kann.

Besonders vorteilhaft ist eine Ausführungsform der Erfindung, bei der ein Teil der dauerhaft gespeicherten Daten während des bestimmungsgemäßen Betriebs des Sensors geändert werden kann. Dies hat den Vorteil, daß der Sensor sofort nach dem Einschalten Kalibrationsdaten zur Verfügung hat, ein Teil dieser Daten jedoch während des normalen Betriebs des Sensors aufgrund geänderter Bedingungen verändert werden kann. So werden beispielsweise die Kalibrationsdaten, welche beispielsweise mechanische Einbautoleranzen ausgleichen, gegen ein Überschreiben gesperrt, wohingegen Kalibrationsdaten, welche beispielsweise abhängig von der Temperatur sind, verändert werden können. Das heißt, der Sensor ist zwar im Hinblick auf bestimmte Toleranzen optimal festkalibriert, wohingegen er im Hinblick auf andere Toleranzen wie bisher auch von Zeit zu Zeit nachkalibriert werden kann. Dies schließt insbesondere die Möglichkeit ein, die im nicht flüchtigen Speicher enthaltenen Startwerte nach dem Einschalten unverändert zu lassen, jedoch innerhalb eines Betriebszyklus Änderungen zuzulassen.

Mittels eines erfindungsgemäßen Verfahrens beziehungsweise mittels einer erfindungsgemäßen Schaltungsanordnung wird in vorteilhafter Weise eine optimale Anpassung an die Sensorempfindlichkeit und Einbausituation gewährleistet. Dies resultiert in einer minimierten Vibrationsempfindlichkeit nach dem Einschalten des Sensors bei gleichzeitiger Maximierung des erreichbaren Luftspaltes. Des weiteren ist ein schnelles und korrektes Wiederanlaufen nach Unterspannung gewährleistet.

Die erfindungsgemäßen Abgleichkonzepte sind in vorteilhafter Weise unabhängig von der jeweiligen Sensortechnologie (z.B. Hall, MR, GMR) einsetzbar und können bestehende Abgleichalgorithmen ergänzen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

### Zeichnung

Es zeigt
Figur 1 eine Kalibrationsanordnung, die zur Erläuterung dient,
Figur 2 eine Ausführungsform, der erfindungsgemäßen Kalibrationsanordnung,
Figur 3 eine schematische Darstellung einer Schaltungsanordnung zur Initialisierung der nichtflüchtigen Speicherung der sensorinternen Kalibrierdaten und
Figur 4 ein Ablaufschema der Abgleichprozedur.

### Beschreibung

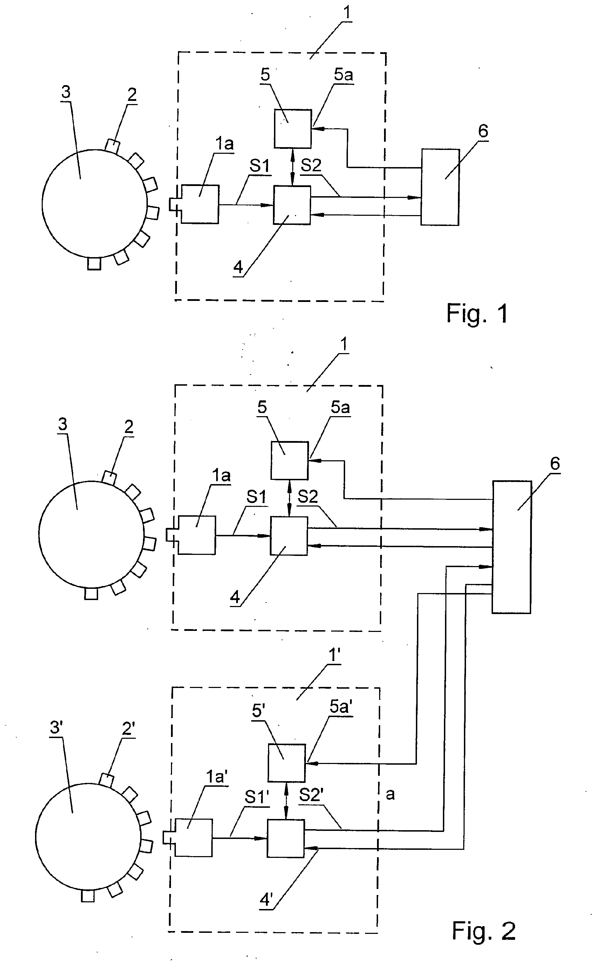

Wie Figur 1 entnommen werden kann, ist ein Aufnehmer 1a eines Sensors 1, mittels dem die Drehzahl eines Zahnrades 3, welches beispielsweise ein Geberrad eines ABS-Systems oder einer Motorsteuerung ist, erfaßt werden soll, so angeordnet, daß die Stirnseiten der Zähne 2 des Zahnrades 3 an dem Aufnehmer 1a des Sensors 1 vorbeistreichen. Durch das Vorbeistreichen der Zähne 2 an dem Aufnehmer 1a des Sensors 1 wird in dem Aufnehmer 1a des Sensors 1 eine Feldstärkenänderung hervorgerufen.

Die Feldstärkenänderung wird von dem Aufnehmer 1a des Sensors 1 in ein elektrisches Signal S1 umgewandelt. Das elektrische Signal S1 wird in einer mit dem Aufnehmer 1a des Sensors 1 verbundenen Schaltungsanordnung 4 aufbereitet. Das aufbereitete Signal S2 wird einer Abgleicheinheit 6, beispielsweise einem Steuergerät zugeführt, in dem es bestimmungsgemäß verarbeitet wird.

Die Schaltungsanordnung 4 ist mit einem Speicher 5 verbunden, in dem Daten dauerhaft gespeichert werden können. Die Schaltungsanordnung 4 und der Speicher 5 sind Bestandteil des Sensors 1. Die Abgleicheinheit 6, zum Beispiel ein integrierter Schaltkreis (IC) kann Bestandteil des Sensors 1 sein oder eine externe Baugruppe. Sofern die von der Schaltungsanordnung 4 an den Speicher 5 angelegten Daten gespeichert werden sollen, wird von der Abgleicheinheit 6 an einen Funktionseingang 5a des Speichers 5 ein entsprechendes Speichersignal angelegt. Ein solches Speichersignal entspricht beispielsweise einer kurzfristigen Anhebung der Versorgungsspannung.

Die zuvor beschriebene Anordnung ist im Ausführungsbeispiel nach Figur 2 bis auf die Abgleicheinheit 6 in identischer Form nochmals vorhanden. Gleiche Elemente weisen dieselben Bezugszeichen auf. Zur Unterscheidung sind sie jedoch mit einem Strich versehen.

Beim ersten Einsatz des Sensors 1 werden die von der Schaltungsanordnung 4 an die Abgleicheinheit 6 beziehungsweise das Steuergerät 6 gelegten Daten mit den von der Schaltungsanordnung 4' an das Steuergerät 6 gelegten Daten verglichen. Ergibt der Vergleich, daß die von der Schaltungsanordnung 4 an das Steuergerät 6 gelegten Daten nicht fehlerbehaftet sind, gibt das Steuergerät 6 an die Schaltungsanordnung 4 ein Befehl zum Kalibrieren des Sensors 1. Die Kalibrationsdaten werden an den Speicher 5 gelegt, in den sie aufgrund eines ebenfalls vom Steuergerät 6 ausgegebenen Signals dauerhaft gespeichert werden.

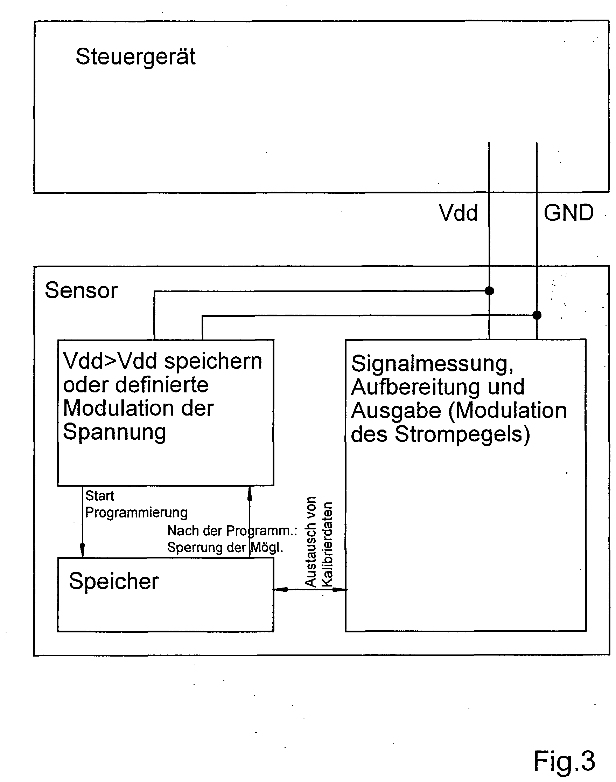

In Figur 3 ist eine schematische Darstellung einer Schaltungsanordnung zu Initialisierung der nicht flüchtigen Speicherung der sensorinternen Kalibrierdaten gezeigt. Wie der Figur entnommen werden kann, ist die Spannungsversorgung eines Steuergerätes 6 mit der Spannungsversorgung eines Sensors 1 verbunden. Intern ist die Spannungsversorgung des Sensors 1 insbesondere mit der Schaltungsanordnung 4 und einem Schaltungselement 7 verbunden, welches beispielsweise eine kurzzeitige Erhöhung der Versorgungsspannung oder eine Modulation der Versorgungsspannung auswerten kann. Ein Ausgang 7a des Schaltungselements 7 ist mit einem Speicher 5 verbunden. Ein erster Ausgang 5a des Speichers 5 ist mit dem Schaltungselement 7 verbunden. Des weiteren ist ein zweiter Ausgang 5b des Speichers 5, über den bidirektional Daten gesendet werden können, mit der Schaltungsanordnung 4 verbunden.

Wie bereits bei der Beschreibung der Figuren 1 und 2 erwähnt wurde, legt die Schaltungsanordnung 4 an den Speicher 5 die für den Sensor 1 ermittelten optimalen Kalibrationsdaten an. Diese Daten werden aufgrund eines von der Abgleicheinheit 6 gesendeten Signals im Speicher 5 dauerhaft gespeichert.

Die Speicherung der Daten im Speicher 5 wird dadurch eingeleitet, daß die Abgleicheinheit 6 auf die Leitungen 6a, 6b zur Spannungsversorgung beispielsweise eine erhöhte Spannung anlegt. Diese erhöhte Spannung wird von dem Schaltungselement 7 erkannt, welches daraufhin an seinem Ausgang 7a ein Signal an den Speicher 5 abgibt, woraufhin der Speicher 5 die am bidirektionalen Ausgang 5b anliegenden Daten dauerhaft speichert. Nach Speicherung der Daten gibt der Speicher 5 über seinen ersten Ausgang 5a ein Signal an das Schaltungselement 7, wodurch sichergestellt wird, daß das Schaltungselement 7 nicht noch einmal an seinem Ausgang 7a ein Signal zur Speicherung der Daten ausgibt. Die Unterdrückung des Speichersignals könnte jedoch auch von der Abgleicheinheit 6 vorgenommen werden.

Bei einem erneuten Inbetriebnehmen des Sensors 1 werden die in dem nicht flüchtigen Speicher 5 gespeicherten Daten über den zweiten Ausgang 5b von der Schaltungsanordnung 4 ausgelesen und zur Kalibrierung des Sensors 1 verwendet. Hierdurch ist der Sensor 1 bereits unmittelbar nach der Inbetriebnahme kalibriert. Es ist nicht mehr erforderlich, die Kalibrationsdaten zunächst zu ermitteln und danach die Kalibrierung des Sensors 1 vorzunehmen.

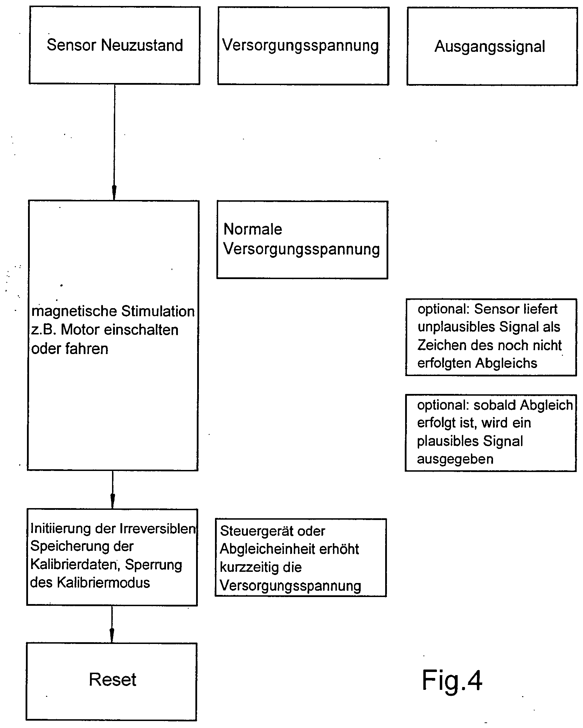

Das in Figur 4 angegebene Ablaufschema verdeutlicht das erfindungsgemäße Verfahren zur Kalibrierung eines Sensors. Wie Figur 4 entnommen werden kann, ist ein Sensor im Neuzustand zunächst für eine bestimmte Versorgungsspannung und ein bestimmtes Ausgangssignal voreingestellt. Nachdem der Sensor beispielsweise durch eine magnetische Stimulation, die beispielsweise durch das Starten des Motors oder den Fahrtbeginn erfolgt, erstmalig in Betrieb genommen wird, findet eine Kalibrierung des Sensors statt, wobei zunächst die erforderlichen Kalibrationsdaten ermittelt werden. Hierbei kann vorgesehen sein, daß der Sensor solange er noch nicht kalibriert ist, ein unplausibles Signal liefert und sobald der Abgleich des Sensors erfolgt ist, ein plausibles Signal ausgibt. Die am Sensor anliegende Spannung befindet sich im normalen Toleranzbereich.

Nachdem die optimalen Kalibrationsdaten erfaßt worden sind und der Sensor kalibriert ist, wird eine irreversible Speicherung der Kalibrierdaten initiiert und der Kalibriermodus gesperrt. Dies kann dadurch geschehen, daß eine Abgleicheinheit, welche das Steuergerät des Kraftfahrzeugs sein kann, kurzzeitig die Versorgungsspannung erhöht. Hierdurch ist die Kalibrierung des Sensors abgeschlossen und die Kalibrationsdaten stehen dauerhaft unmittelbar zur Verfügung. Durch einen abschließenden Reset, durch den die Kalibrationsdaten im nicht flüchtigen Speicher selbstverständlich nicht gelöscht werden, kann der Sensor in seinen Grundzustand versetzt werden.

Grundsatz des erfindungsgemäßen Verfahrens ist somit die nicht veränderliche Speicherung von Kalibrationsdaten des Magnetosensors entweder in der wirklichen Einbauposition im Fahrzeug (Variante I) oder in einer Einbaulage, die der tatsächlichen möglichst ähnlich ist, am Bandende der Produktion des Sensorherstellers (Variante II). Die Variante I stellt auch für den Fahrzeughersteller einen Vorteil dar, da die im Fahrzeug auftretenden Toleranzen im Rahmen der Kalibrierung mit ausgeglichen werden und so ein Optimum an Unempfindlichkeit gegenüber Vibrationen bei gleichzeitiger Maximierung der Empfindlichkeit erreicht werden kann.

Im Gegenzug muß die Kalibrierung und Speicherung der Abgleichdaten jedoch möglichst einfach und auch durch Werkstätten sicher beherrschbar sein. Drei Varianten sind Teil dieser Erfindung:
Variante Ia:
   (1) vollständige Sensorfertigung ohne Abgleich beim Zulieferer
   (2) Einbau in das Fahrzeug. Anschluß einer Abgleicheinheit an den Sensor. Drehen des zugehörigen Geberrades (zum Beispiel für ABS und Motorsteuerung durch Fahren einer kurzen Strekke). Der Sensor führt einen automatischen Abgleich durch (zum Beispiel durch Bestimmung von Minima und Maxima, die Mittelwertbildung liefert Offset, weiterhin festlegen eines internen Verstärkungsfaktors). Kontrolle des Ausgangssignals durch die Abgleicheinheit. Nachdem eine ausreichende Zahl an Ausgangsflanken oder Pulsen gemessen ist, wird zum Beispiel durch kurzzeitige Erhöhung der Versorgungsspannung die Speicherung der Kalibrierwerte eingeleitet. Der Sensor speichert seine Kalibrierwerte nicht änderbar und sperrt diese Möglichkeit der Kalibrierung. Nach Entfernung der Abgleicheinheit und Anschluß am Steuergerät arbeitet der Sensor als magnetischer Drehzahlsensor ("Normalbetrieb") (siehe auch Figur 3).
Variante Ib:
   (1) vollständige Sensorfertigung ohne Abgleich beim Zulieferer
   (2) Sensor liefert nach dem ersten Anschluß am Steuergerät ein nicht plausibles Signal. Das Steuergerät springt daraufhin in einen Kalibrationsmodus und führt die unter Variante Ia (2) angegebenen Schritte aus. Zur Kontrolle des Abgleichs wird zum Beispiel für die Anwendung ABS mit dem Ausgangssignal der anderen Drehzahlsensoren verglichen und ein Minimum der Anzahl ausgegebener Drehzahlsensorsignale abgewartet. Bei korrekter Funktion wird automatisch die Versorgungsspannung kurz angehoben und damit die irreversible Speicherung der Kalibrierdaten im Sensor durchgeführt und die Speicherung gesperrt. Der Sensor wird nach erfolgtem Schreiben der Kalibrierdaten selbständig resettiert (siehe auch Figur 3).
Variante II:
   (1) Sensorfertigung bis zum Bandende der Sensorfertigung
   (2) Bandendeabgleich: Der Sensor wird entsprechend der späteren Einbaulage im Fahrzeug vor einem Geberrad (Stahlrad oder Multipolrad) positioniert. Die Kalibrierung erfolgt unter diesen Standardbedingungen automatisch im Sensor. Hierzu wird der Sensor mit einer vorgegebenen Spannung versorgt. Eine integrierte Abgleichlogik ermittelt automatisch die zu speichernden Werte. Nach erfolgter Kalibrierung und Kontrolle des Sensorausgangssignals wird zum Beispiel kurzzeitig die Versorgungsspannung angehoben. Dies veranlaßt den Sensor die Kalibrierdaten fest zu speichern und Programmierung zu sperren.

Auch nachdem der Sensor programmiert wurde können interne Nachkalibrieralgorithmen, zum Beispiel mit Amplitudenbegrenzung, aktiv bleiben und so einen sicheren Betrieb garantieren.

Insgesamt zeichnen einen Sensor, der entsprechend der hier beschriebenen Erfindung funktioniert, folgende Eigenschaften aus:
- optimale Anpassung von Sensorempfindlichkeit und Einbausituation
- minimierte Vibrationsempfindlichkeit nach dem Einschalten des Sensors bei gleichzeitiger Maximierung der Empfindlichkeit, das heißt, des erreichbaren Luftspaltes
- schnelles und korrektes Wiederanlaufen nach Unterspannung
- einfaches und sicheres Abgleichverfahren in der wirklichen Einbauposition.

## Patentansprüche

1. Verfahren zur Kalibrierung eines Sensors (1), wobei der Sensor (1) in einer vorbestimmten Lage angeordnet wird, an den Sensor (1) eine Abgleicheinheit (6) angeschlossen wird, die zur Kalibrierung erforderlichen Daten ermittelt werden und die ermittelten Kalibrationsdaten in einen Speicher (5) des Sensors dauerhaft gespeichert werden, wobei die Kalibrierung nach dem bestimmungsgemäßen Einbau des Sensors (1) erfolgt, wobei die vom Sensor (1) zu detektierende Funktion wenigstens einmal durchgeführt wird, das vom Sensor (1) entsprechend ausgegebene Signal in der Abgleicheinheit (6) auf Plausibilität geprüft wird, **dadurch gekennzeichnet, dass** bei Plausibilität die Kalibrationsdaten in den Speicher (5) geschrieben werden, wobei mehrere demselben Zweck dienende Sensoren (1, 1') vorhanden sind und die Plausibilitätsprüfung durch Vergleich des Ausgangssignals des zu kalibrierenden Sensors (1) mit dem Ausgangssignal eines anderen Sensors (1') erfolgt.

2. Verfahren nach Anspruch 1, **dadurch gekennzeichnet, dass** die Abgleicheinheit (6) ein vorbestimmtes Signal abgibt, welches zur Kalibrierung an den Sensor (1) angelegt wird.

3. Verfahren nach einem der vorangegangenen Ansprüche, **dadurch gekennzeichnet, dass** sich die bestimmungsgemäße Einbaulage in einem Kraftfahrzeug befindet in dem der Sensor (1) mit der Abgleicheinheit (6) verbunden ist, welche das Steuergerät des Kraftfahrzeugs ist.

4. Verfahren nach Anspruch 3, **dadurch gekennzeichnet, dass** die Erfassung und Speicherung der Kalibrationsdaten durch ein Startsignal eingeleitet wird.

5. Verfahren nach Anspruch 1 oder 2, **dadurch gekennzeichnet, dass** eine externe Abgleicheinheit als die Abgleicheinheit (6) an den Sensor (1) angeschlossen wird.

6. Verfahren nach einem der Ansprüche 1 bis 5, **dadurch gekennzeichnet, dass** wenigstens ein Teil der dauerhaft gespeicherten Daten während des bestimmungsgemäßen Betriebs des Sensors änderbar ist.

7. Verfahren nach einem der Ansprüche 1 bis 6, **dadurch gekennzeichnet, dass** die Speicherung der Daten durch kurzzeitige Anhebung der Versorgungsspannung des Sensors durch das Steuergerät erfolgt.

8. Kombination aus einer Abgleicheinheit (6) und einem Sensor (1) mit einer Schaltungsanordnung (4) und einem Speicher (5), wobei der Sensor (1) Mittel zur Erfassung von Daten zur Kalibrierung des Sensors (1) aufweist, wobei die Kalibrationsdaten in dem Speicher (5) speicherbar sind, wobei der Speicher (5) ein nichtflüchtiger Speicher ist und die Schaltungsanordnung (4) mit dem Speicher (5) verbunden ist, an den Sensor (1) die Abgleicheinheit (6) angeschlossen ist, die zur Kalibrierung erforderlichen Daten ermittelt werden und die ermittelten Kalibrationsdaten in einen Speicher (5) des Sensors dauerhaft gespeichert werden, wobei die Abgleicheinheit (6) ausgebildet ist, um die Kalibrierung nach dem bestimmungsgemäßen Einbau des Sensors (1) durchzuführen, wobei die vom Sensor (1) zu detektierende Funktion wenigstens einmal durchgeführt wird, das vom Sensor (1) entsprechend ausgegebene Signal in dem Steuergerät auf Plausibilität geprüft wird, dadurch gekennzeichet, dass bei Plausibilität die Kalibrationsdaten in den Speicher (5) geschrieben werden, wobei mehrere demselben Zweck dienenden Sensoren (1, 1') vorgesehen sind und die Plausibilitätsprüfung durch Vergleich des Ausgangssignals des zu kalibrierenden Sensors (1) mit dem Ausgangssignal eines anderen Sensors (1') erfolgt.

## Claims

1. Method for calibrating a sensor (1), wherein the sensor (1) is arranged in a predetermined position, an adjusting unit (6) is connected to the sensor (1), the data required for calibration are determined and the calibration data determined are permanently stored in a memory (5) of the sensor, wherein the calibration is carried out after the intended installation of the sensor (1), wherein the function to be detected by the sensor (1) is carried out at least once, the signal correspondingly output by the sensor (1) is checked for plausibility in the adjusting unit (6), **characterized in that** in the case of plausibility the calibration data are written to the memory (5), wherein a plurality of sensors (1, 1') serving the same purpose are present and the plausibility check is carried out by comparing the output signal of the sensor (1) to be calibrated with the output signal of another sensor (1').

2. Method according to Claim 1, **characterized in that** the adjusting unit (6) outputs a predetermined signal which is applied to the sensor (1) for the purpose of calibration.

3. Method according to either of the preceding claims, **characterized in that** the intended installation position is situated in a motor vehicle in which the sensor (1) is connected to the adjusting unit (6), which is the control unit of the motor vehicle.

4. Method according to Claim 3, **characterized in that** the acquisition and storage of the calibration data are initiated by a start signal.

5. Method according to Claim 1 or 2, **characterized in that** an external adjusting unit is connected as the adjusting unit (6) to the sensor (1).

6. Method according to any of Claims 1 to 5, **characterized in that** at least a portion of the permanently stored data can be changed during the intended operation of the sensor.

7. Method according to any of Claims 1 to 6, **characterized in that** the data are stored by the supply voltage of the sensor being momentarily raised by the control unit.

8. Combination of an adjusting unit (6) and a sensor (1) with a circuit arrangement (4) and a memory (5), wherein the sensor (1) has means for acquiring data for calibrating the sensor (1), wherein the calibration data can be stored in the memory (5), wherein the memory (5) is a non-volatile memory and the circuit arrangement (4) is connected to the memory (5), to which sensor (1) the adjusting unit (6) is connected, the data required for calibration are determined and the calibration data determined are permanently stored in a memory (5) of the sensor, wherein the adjusting unit (6) is configured to carry out the calibration after the intended installation of the sensor (1), wherein the function to be detected by the sensor (1) is carried out at least once, the signal correspondingly output by the sensor (1) is checked for plausibility in the control unit, **characterized in that** in the case of plausibility the calibration data are written to the memory (5), wherein a plurality of sensors (1, 1') serving the same purpose are provided and the plausibility check is carried out by comparing the output signal of the sensor (1) to be calibrated with the output signal of another sensor (1').

## Revendications

1. Procédé d'étalonnage d'un capteur (1), dans lequel le capteur (1) est disposé à une position prédéterminée, une unité d'égalisation (6) est raccordée au capteur (1), les données nécessaires à l'étalonnage sont déterminées et les données d'étalonnage déterminées sont stockées de manière permanente dans une mémoire (5) du capteur, dans lequel l'étalonnage est effectué après l'installation conforme du capteur (1), dans lequel la fonction devant être détectée par le capteur (1) est exécutée au moins une fois et la plausibilité du signal émis par le capteur (1) est vérifiée dans l'unité d'égalisation (6),
**caractérisé en ce qu'**en cas de plausibilité, les données d'étalonnage sont écrites dans la mémoire (5), dans lequel plusieurs capteurs (1, 1') remplissant la même fonction sont présents et la vérification de plausibilité est effectuée en comparant le signal de sortie du capteur (1) devant être étalonné au signal de sortie d'un autre capteur (1').

2. Procédé selon la revendication 1, **caractérisé en ce que** l'unité d'égalisation (6) délivre un signal prédéterminé qui est appliqué au capteur (1) pour l'étalonnage.

3. Procédé selon l'une des revendications précédentes, **caractérisé en ce que** la position de montage prévue se situe dans un véhicule automobile dans lequel le capteur (1) est relié à l'unité d'égalisation (6), qui est l'unité de commande du véhicule automobile.

4. Procédé selon la revendication 3, **caractérisé en ce que** l'acquisition et le stockage des données d'étalonnage sont déclenchés par un signal de démarrage.

5. Procédé selon la revendication 1 ou 2, **caractérisé en ce qu'**une unité d'égalisation externe est connectée au capteur (1) en tant qu'unité d'égalisation (6).

6. Procédé selon l'une des revendications 1 à 5, **caractérisé en ce qu'**au moins une partie des données stockées de manière permanente peuvent être modifiées pendant le fonctionnement conforme du capteur.

7. Procédé selon l'une des revendications 1 à 6, **caractérisé en ce que** le stockage des données s'effectue par une brève augmentation de la tension d'alimentation du capteur par l'appareil de commande.

8. Combinaison constituée d'une unité d'égalisation (6) et d'un capteur (1) comportant un système de circuit (4) et une mémoire (5), dans laquelle le capteur (1) comporte des moyens destinés à acquérir des données pour l'étalonnage du capteur (1), dans laquelle les données d'étalonnage peuvent être stockées dans la mémoire (5), dans laquelle la mémoire (5) est une mémoire non volatile et le système de circuit (4) est relié à la mémoire (5), l'unité d'égalisation (6) est reliée au capteur (1), les données nécessaires à l'étalonnage sont déterminées et les données d'étalonnage déterminées sont stockées de manière permanente dans une mémoire (5) du capteur, dans laquelle l'unité d'égalisation (6) est conçue pour effectuer l'étalonnage après l'installation conforme du capteur (1), dans laquelle la fonction devant être détectée par le capteur (1) est exécutée au moins une fois et la plausibilité du signal délivré par le capteur (1) est vérifiée dans l'appareil de commande, **caractérisé en ce qu'**en cas de plausibilité, les données d'étalonnage sont écrites dans la mémoire (5), dans laquelle plusieurs capteurs (1, 1') remplissant la même fonction sont prévus et la vérification de plausibilité est effectuée en comparant le signal de sortie du capteur (1) devant être étalonné au signal de sortie d'un autre capteur (1').
